# DEMANDE DE BREVET EUROPEEN

(11) **EP 4 623 749 A1**
(43) Date de publication de la demande: **01.10.2025**
(21) Numéro de dépôt: 25165927.2
(22) Date de dépôt: 25.03.2025
(51) Int. Cl.: A44C 27/00, B22F 7/06, B23K 20/00, B23K 20/02, B23K 20/10, B33Y 10/00, B33Y 80/00, C22C 1/04, C22C 5/00, B29C 64/10, G04B 37/22, B32B 15/01, B23P 13/00, B23P 15/00, B23K 35/32, B23P 11/02, B44C 1/26, B44C 3/10, B22D 25/02, B23K 35/30, B44C 5/00

(54) **PROCEDE DE FABRICATION D'UN BLOC COMPOSITE UTILISE POUR LA FABRICATION D'UN ARTICLE DE JOAILLERIE OU D'HORLOGERIE**

(30) Priorité: 27.03.2024 FR 2403115
(71) Demandeur: Richemont International S.A., 1752 Villars-sur-Glâne (CH)
(72) Inventeur: DECOUPES, Christophe, 69005 LYON (FR); DAHAN, Reuben, 94220 CHARENTON LE PONT (FR)
(74) Mandataire: Ipsilon

(57) **Abrégé**

Procédé de fabrication d'un bloc composite (20) en alliage d'or, d'argent, ou de platine, le bloc composite étant formé par assemblage d'au moins deux pièces (1, 2) en matériaux métalliques différents choisis parmi lesdits alliages, au moins une des au moins deux pièces ayant au moins une région creuse (5), et au moins une autre des au moins deux pièces ayant au moins une région pleine (6). Ce bloc composite est utilisé pour la fabrication d'un article de joaillerie ou d'horlogerie (30). Le procédé comprend les étapes suivantes :
a) formation de la au moins une des au moins deux pièces ayant la ou les régions creuses,
b) assemblage des au moins deux pièces, par insertion de la ou les régions pleines de la au moins une autre des au moins deux pièces dans la ou les régions creuses de la au moins une desdites au moins deux pièces, la ou les régions pleines insérées dans la ou les régions creuses remplissant au moins en partie ladite ou lesdites régions creuses par complémentarité de forme, l'assemblage étant réalisé, sans étirage des au moins deux pièces, selon une technique choisie parmi le chassage, le frittage de poudre pulvérulente sans liant, et le soudage,
c) obtention d'un bloc composite.

## Description

### Domaine technique de l'invention

La présente invention se rapporte à un procédé de fabrication d'un bloc composite en métal précieux, notamment en alliage d'or, d'argent, ou de platine, par assemblage d'au moins deux pièces en matériaux métalliques différents choisis parmi ces alliages, ainsi qu'à un tel bloc composite. L'invention se rapporte également à un article de joaillerie ou d'horlogerie obtenu à partir du bloc composite, ainsi qu'à son procédé de fabrication.

### Arrière-plan technologique

Dans le domaine de la joaillerie et de l'horlogerie, il est courant d'assembler des couches de matériaux métalliques différents, notamment en métaux précieux ou semi-précieux, afin de former des pièces composites telles que des stratifiés.

A ce sujet, le document US 2927070 décrit un procédé de fabrication d'un composite multicouches, par empilement de plusieurs feuilles colorées, collage de celles-ci pour obtenir un laminé, réalisation d'un motif en surface du laminé, écrêtage des portions du motif qui dépassent de la surface principale, et enroulement du laminé. Ce type de procédé permet d'obtenir un collage optimal des couches du stratifié coloré.

Le EP 0 457 350 décrit un article en métal précieux et sa préparation par frittage dans un four d'une poudre contenant nécessairement un liant. Le document IT FI20 110 235 décrit un procédé de fabrication d'un article de joaillerie par assemblage d'une pluralité de composants métalliques de longueur indéfinie, ces composants subissant ensuite un traitement par déformation plastique. Le document DE 27 05 762 décrit un procédé de fabrication d'articles de joaillerie consistant à emboîter les éléments tubulaires afin d'obtenir une pièce composite, et à étirer cette pièce composite jusqu'à ce que les parties tubulaires soient parfaitement en contact les unes avec les autres.

Le document EP 2279825 décrit quant à lui un procédé d'assemblage plusieurs pièces en alliage d'or par brasage. Une couche d'étain est d'abord appliquée sur les surfaces des pièces destinées à venir en contact. Les pièces sont ensuite collées à la presse, puis chauffées à haute température, conduisant ainsi à l'assemblage stratifié final.

Un autre exemple d'assemblage est décrit dans le document FR 2460744, qui se rapporte à un matériau métallique composite et à son procédé de fabrication. Le matériau composite est formé de plusieurs matériaux métalliques différents liés entre eux par liaison métallique, et qui forme un motif représentant des flammes de différentes couleurs.

Ces différents procédés permettent de fabriquer des matériaux composites constitués de plusieurs matériaux métalliques différents, qui ont des couleurs différentes, de sorte à obtenir des motifs originaux pour les pièces de joaillerie ou d'horlogerie fabriquées à partir de ces matériaux composites.

Il reste toutefois nécessaire de mettre au point d'autres techniques de fabrication de tels matériaux composites, afin de les horlogers et les joaillers puissent choisir la technique la plus adaptée à leur cahier des charges. La présente invention permet notamment de fabriquer un bloc composite par assemblage d'au moins deux pièces, sans apport de matière organique (liant) ou métallique (brasure), et sans déformation plastique (phénomène inévitable dans l'assemblage par étirage).

### Brève description de l'invention

Un but de l'invention est de fournir un procédé de fabrication d'un bloc composite permettant de pallier les inconvénients susmentionnés.

L'invention vise également à fournir un tel procédé de fabrication permettant de former un bloc composite, qui se prête idéalement à la fabrication d'une pièce de joaillerie ou d'horlogerie elle-même composite, tout particulièrement celles qui nécessitent la formation d'un motif constitués de plusieurs matériaux métalliques différents.

A cette fin, l'invention propose un procédé de fabrication d'un bloc composite en alliage choisi dans le groupe constitué par : les alliages d'or, les alliages d'argent, et les alliages de platine, le bloc composite étant formé par assemblage d'au moins deux pièces en matériaux métalliques différents choisis parmi lesdits alliages, au moins une des deux pièces ayant au moins une région creuse, et au moins une des deux pièces ayant au moins une région pleine, le procédé comprenant les étapes suivantes :
a) formation de la au moins une des pièces ayant au moins une région creuse, avantageusement par retrait d'au moins une région de matière,
b) assemblage des au moins deux pièces, par insertion d'au moins une région pleine d'au moins une des pièces dans au moins une région creuse d'au moins une autre desdites pièces, la ou les régions pleines insérées dans au moins une région creuse remplissant au moins en partie ladite au moins une région creuse par complémentarité de forme, l'assemblage étant réalisé, sans étirage des pièces, selon une technique choisie parmi le chassage (à chaud ou à froid), le frittage de poudre pulvérulente sans liant, et le soudage (sans apport de matière),
c) obtention d'un bloc composite.

L'assemblage de l'étape b) présente de nombreux avantages par rapport à d'autres techniques. Par exemple, le chassage permet d'éviter la déformation plastique et géométrique résultant d'un assemble par étirage comme divulgué dans les documents IT FI20 110 235 et DE 27 05 762. Le frittage de poudre pulvérulente permet de simplifier le procédé de frittage dans la mesure où il n'y a pas de liant à éliminer, ce qui n'est pas le cas du procédé du document EP 0 457 350. Ainsi, le frittage de poudre pulvérulente permet d'améliorer la densité du bloc composite en réduisant la formation de micropores voire de microfissures. L'absence de liant (poudre pulvérulente) permet ainsi d'éviter les écueils du déliantage.

Dans le procédé selon l'invention, l'assemblage des pièces peut être réalisé selon différentes techniques :
- Chassage : serrage entre les au moins deux pièces à assembler. De manière préférée, le chassage est réalisé (1) par usinage d'au moins deux pièces de formes complémentaires ; puis (2) par insertion d'une pièce dans l'autre, les pièces n'ayant pas de jeu entre elles.
- Frittage de poudre : usinage d'une première pièce, puis frittage de poudre, de préférence au sein de la première pièce, pour réaliser la deuxième pièce de forme complémentaire. Le frittage est avantageusement réalisé SPS (de l'anglais « spark plasma sintering »), également appelé frittage flash. Le frittage est avantageusement suivi d'une étape de pressage isostatique à chaud (ou « Hot isostatic pressing (HIP) » en anglais). L'alliage constituant la poudre peut présenter un point de fusion proche (±10°C, voire ±20°C) de celui de l'alliage de la première pièce. Selon un mode de réalisation, l'alliage constituant la poudre peut présenter un point de fusion supérieur à celui de l'alliage de la première pièce sans que cela nuise à la qualité du bloc composite. De préférence, l'alliage constituant la poudre présente un point de fusion inférieur à celui de l'alliage de la première pièce.

Ainsi, l'étape b) d'assemblage peut être réalisée par frittage de poudre sans liant, au moins une région pleine d'au moins une des pièces étant constituée de poudre d'alliage frittée.
- Soudage : souder une première pièce et une deuxième pièce. Lors du soudage, des liaisons métalliques se forment à l'interface entre les deux pièces (alliages différents) à une température ou suivant un profil de température prédéterminé.

De manière préférée, le soudage est réalisé (1) par usinage d'au moins deux pièces, de préférence de formes complémentaires, de manière à obtenir un jeu maîtrisé entre les pièces assemblées (avantageusement un jeu d'au moins 0,02 mm, de préférence au moins 0.05 mm, préférentiellement moins de 1 mm, avantageusement entre 0,02 et 0,5 mm) ; puis (2) par chauffage uniforme des pièces (soudage). Ce jeu entre les pièces est comblé lors de l'assemblage, par le ou les alliages en fusion. Avantageusement, les alliages ont des points de fusion différents présentant un écart d'au moins 50°C, de préférence un écart entre 50°C et 500°C. Par exemple, notamment dans le cas de pièces en or rouge et en or gris, la température de soudage est avantageusement comprise entre 950 et 980°C. Le chauffage uniforme des pièces (soudage) peut être réalisé dans un four (avantageusement entre 800°C et 1000°C) et comprendre une montée en température, puis un palier à la température de soudage, puis une descente en température. La montée et/ou la descente en température peut être réalisée entre 50 et 150°C/minute, avantageusement entre 90 et 110°C/minute, plus avantageusement à 100°C/minute. Le palier à la température de soudage consiste à maintenir les pièces à cette température, avantageusement pendant 1 à 20 minutes, plus avantageusement entre 3 et 10 minutes, préférentiellement pendant 5 minutes. Ce palier est d'une durée relativement courte afin de contrôler le chauffage et la fusion des alliages.

De manière avantageuse, le soudage est réalisé à une température inférieure d'au moins 50°C par rapport à la température de fusion du matériau métallique à plus haut point de fusion. De manière avantageuse, seul le matériau métallique ayant le plus bas point de fusion entre en fusion lors de la soudure. Avantageusement, la température du soudage est maintenue pendant au moins une minute, préférentiellement au moins 2 minutes, plus préférentiellement au moins 3 minutes.

Ces techniques (chassage, frittage de poudre et soudage) peuvent être utilisées pour assembler au moins deux pièces.

Préférentiellement, l'assemblage est réalisé par frittage ou par soudage, plus avantageusement par frittage.

Le bloc est dit « composite » en ce qu'il est constitué de plusieurs matériaux différents, en particulier de plusieurs matériaux métalliques différents. Les matériaux métalliques formant le bloc composite sont des alliages, plus particulièrement des alliages d'or, d'argent, ou de platine. Ainsi, dans la présente description de l'invention, les termes « matériau métallique » et « alliage » désigne un alliage choisi dans le groupe constitué des alliages d'or, des alliages d'argent, et des alliages de platine.

De manière préférée, le bloc composite présente une épaisseur comprise entre 0,5 et 50 mm, par exemple de 4 à 50 mm. Avantageusement, il s'inscrit dans un diamètre de 5 à 50 mm.

Lorsque l'alliage est à base d'or, il comprend avantageusement au moins 583 ‰ (soit au moins 14 carats), plus avantageusement au moins 750 ‰ massique d'or (18 carats), par exemple au moins 917 ‰ massique d'or (22 carats). Il peut notamment s'agir d'or jaune, d'or gris, d'or rose ou d'or rouge.

Lorsque l'alliage est à base d'argent, il comprend avantageusement au moins 900 ‰ massique d'argent, plus avantageusement au moins 925 ‰ massique d'argent.

Lorsque l'alliage est à base de platine, il comprend avantageusement au moins 930 ‰ massique de platine, par exemple 953 ‰ massique de platine.

Selon l'invention, une région creuse est une portion de pièce en trois dimensions, obtenue, par exemple, en creusant le matériau métallique constitutif de la pièce. La matière métallique non creusée constitue une région pleine. Les régions pleines et creuse peuvent présenter des formes variées, par exemple un cylindre, un cube, un parallélépipède rectangle ou non, une sphère ou une portion de sphère, ou une combinaison de ces formes tel qu'un trèfle, de préférence à quatre feuilles. De manière avantageuse, la pièce de joaillerie ou d'horlogerie, se présente sous la forme d'un trèfle, de préférence un trèfle à quatre feuilles.

Pour une pièce de forme cylindrique par exemple, les régions creuses peuvent être notamment des secteurs en trois dimensions. Un secteur est une fraction angulaire de cylindre. Il s'agit de la combinaison d'un secteur angulaire en deux dimensions (une face délimitée par deux demi-droites partant de l'axe principal du cylindre, donc transversale audit axe) et d'une troisième dimension qui est parallèle à l'axe du cylindre. Il se présente donc sous la forme d'une portion de cylindre, en trois dimensions à la manière d'une part de gâteau, comprenant un volume qui s'étend selon une direction parallèle à la hauteur du cylindre, délimité par deux faces transversales qui sont les secteurs angulaires correspondant.

En pratique, avant l'assemblage des pièces entre elles, les pièces métalliques sont positionnées l'une par rapport à l'autre de sorte que leurs faces comprenant la région creuse, généralement leurs faces transversales, soient en vis-à-vis. Les pièces sont positionnées dans une conformation telle que les régions pleines de l'une des pièces font face aux régions creuses d'une autre pièce. Les pièces sont alors rapprochées puis assemblées par insertion des régions pleines de l'une des pièces dans les régions creuses d'une autre pièce.

L'imbrication des pièces métalliques entre elles forme un motif multi-matériaux comprenant des régions pleines des différents matériaux métalliques dans la structure du bloc composite.

En particulier, lorsque celui-ci est formé par l'assemblage de pièces cylindriques dont des secteurs ont été retirés, le motif multi-matériaux se comprend une alternance de secteurs des différents matériaux métalliques selon une circonférence du bloc composite.

Ce motif multi-matériaux est tout particulièrement visible sur une section transversale du bloc composite au niveau d'une région de recouvrement des pièces assemblées, c'est-à-dire dans un plan perpendiculaire à l'axe du bloc composite passant par les régions pleines des différentes pièces assemblées. On peut par exemple observer un damier régulier ou non lorsque les régions pleines sont des cubes, ou bien une alternance des secteurs angulaires des différents matériaux métalliques, disposés à la manière de parts de gâteau autour de l'axe du bloc, lorsque les pièces sont cylindriques.

Ce motif multi-matériaux est le point de départ de la fabrication d'une pièce de joaillerie ou d'horlogerie, dont un procédé faisant partie de l'invention est décrit dans la suite du présent texte.

On précise que le bloc composite peut être formé par l'assemblage de deux pièces, trois pièces, quatre pièces ou encore davantage.

Par exemple, lorsque le bloc composite est formé de trois pièces, les pièces sont toutes les trois assemblées par insertion des régions pleines des pièces dans des régions creuses des autres pièces, par complémentarité de forme au moins partielle entre lesdites régions pleines et lesdites régions creuses. Les pièces destinées à être assemblées ne comprennent pas toutes une région creuse. Par exemple, il est possible de créer une région creuse (par exemple par retrait de matière) d'un faible volume cylindrique dans une première pièce cylindrique, puis d'y insérer une deuxième pièce cylindrique de forme complémentaire au faible volume cylindrique retiré. Dans ce cas, seule la première pièce cylindrique comprend une région creuse (par exemple suite à un retrait de matière).

A ce sujet, la « complémentarité de forme » signifie que les régions pleines des pièces remplissent, après assemblage, sensiblement l'ensemble du volume des régions creuses desdites pièces. Par exemple, une région creuse d'une première pièce peut être remplie par une région pleine d'une seule autre pièce, ou bien par les régions pleines de deux autres pièces.

De préférence, toutes les régions creuses des pièces sont remplies par complémentarité de forme, après assemblage, par au moins une région pleine d'au moins une autre pièce. Ainsi, un assemblage de deux pièces conduit à un remplissage de toutes les régions creuses d'une pièce par les régions pleines correspondantes de l'autre pièce. Un assemblage de trois pièces conduit à un remplissage de toutes les régions creuses d'au moins une des trois pièces, de préférence de chacune des trois pièces, par les régions pleines correspondantes des autres pièces, chaque région creuse d'une pièce étant remplie par une région pleine d'une autre pièce ou par une région pleine de chacune des deux autres pièces.

Par ailleurs, dans le cadre de la joaillerie ou de l'horlogerie, il est particulièrement intéressant de prévoir des matériaux métalliques de couleurs différentes. Dès lors, l'alternance des secteurs des pièces se traduit par une alternance de plusieurs couleurs le long de la circonférence du bloc composite. Lorsque les pièces comprennent plusieurs matériaux de couleurs différentes, par exemples deux matériaux pour chacune des pièces, le bloc composite se compose d'une alternance des quatre couleurs le long de sa circonférence.

Le bloc composite n'est cependant pas limité à l'assemblage de pièces cylindriques. Des pièces de section carrée ou hexagonale ou en forme de trèfle à quatre feuilles par exemple, d'épaisseur (ou hauteur) plus ou moins grande devant les autres dimensions de la pièce, conviennent également dans le cadre de l'invention.

Selon d'autres aspects, le procédé de fabrication selon l'invention présente les différentes caractéristiques suivantes prises seules ou selon leurs combinaisons techniquement possibles :
- l'étape a) de formation d'au moins une pièce ayant une région creuse est réalisée par retrait d'au moins une région de matière dans au moins deux des pièces, dites première pièce et deuxième pièce ; et l'étape b) d'assemblage est réalisée par insertion d'au moins une région pleine de la première pièce dans au moins une région creuse de la deuxième pièce, ladite ou lesdites régions pleines remplissent au moins en partie ladite ou lesdites régions creuses par complémentarité de forme ;
- l'étape a) de formation d'au moins une pièce ayant une région creuse est réalisée, avantageusement par retrait, dans chacune des pièces qui sont ultérieurement assemblées et fixées entre elles, de sorte à former au moins une région creuse bordée partiellement ou totalement par au moins une région pleine de chacune des pièces ; et l'étape b) d'assemblage est réalisé par insertion d'au moins une région pleine de chacune des pièces dans au moins une région creuse de chacune des pièces, lesdites régions pleines remplissent au moins en partie lesdites régions creuses par complémentarité de forme ;
- au moins une région pleine d'au moins une des pièces et au moins une région creuse d'au moins une autre desdites pièces présentent deux à deux des formes complémentaires, de sorte qu'après insertion, la région pleine remplit la région creuse par complémentarité de forme ;
- l'étape b) est réalisée par assemblage (chassage, frittage de poudre pulvérulente sans liant, et soudage), avantageusement par soudage, d'au moins une région pleine d'une des pièces avec une région pleine adjacente d'une autre des pièces ;
- au moins deux des pièces se présentent sous la forme de barreaux cylindriques (ou de formes tridimensionnelles, par exemple des jetons), dont les régions creuses sont des secteurs creux qui s'étendent selon une hauteur des barreaux cylindriques, bordés au moins en partie par des secteurs pleins constituant les régions pleines ;
- les pièces (1, 2) présentent une section ou un plan de coupe en forme de trèfle à quatre feuilles,
- au moins l'une des pièces est composée d'au moins deux matériaux métalliques différents, et au moins une autre des pièce est composée d'au moins un matériau métallique différent de ceux de ladite une des pièces, le bloc composite obtenu étant composé d'au moins trois matériaux métalliques différents ;
- les matériaux métalliques des pièces sont de couleurs différentes.

Lorsque le bloc composite comprend (avantageusement constitué de) une première pièce constituée d'un premier alliage et une deuxième pièce constituée d'un deuxième alliage, la première pièce ayant au moins une région creuse et étant en un premier alliage, et la deuxième pièce ayant au moins une région pleine et étant en un deuxième alliage distinct du premier alliage,
le procédé de fabrication du bloc composite comprend au moins les étapes suivantes :
a) formation de la première pièce ayant au moins une région creuse, avantageusement par retrait d'au moins une région de matière,
b) assemblage de la première pièce et d'une deuxième pièce ayant au moins une région pleine (par exemple une poudre constituée par le deuxième alliage), par insertion de la ou des régions pleines de la deuxième pièce dans la ou les régions creuses de la première pièce, la ou les régions pleines insérées dans la ou les régions creuses remplissant au moins en partie la ou les régions creuses par complémentarité de forme,
   l'assemblage étant réalisé, sans étirage des pièces, selon une technique choisie parmi le chassage (à chaud ou à froid), le frittage de poudre pulvérulente sans liant, et le soudage (sans apport de matière),
c) obtention d'un bloc composite comprenant (avantageusement constitué de) deux pièces en deux alliages distincts, de préférence de couleurs différentes.

De manière avantageuse (bloc composite comprenant, ou étant constitué de, une première pièce et une deuxième pièce), la deuxième pièce est constituée d'une région pleine présentant avantageusement un plan de coupe en forme de trèfle à quatre feuilles.

De manière avantageuse (bloc composite comprenant, ou étant constitué de, une première pièce et une deuxième pièce), la première pièce comprend une région pleine comprenant une région creuse ayant un plan de coupe avantageusement en forme de trèfle à quatre feuilles. La région pleine de la première pièce présente avantageusement un périmètre en forme de trèfle à quatre feuilles. La deuxième pièce est avantageusement constituée d'une région pleine présentant avantageusement un plan de coupe en forme de trèfle à quatre feuilles.

De manière avantageuse (bloc composite comprenant, ou étant constitué de, une première pièce et une deuxième pièce), la première pièce comprend une région pleine comprenant une région pleine ayant un plan de coupe en forme de trèfle à quatre feuilles et des régions creuses autour de la région pleine. La deuxième pièce est avantageusement constituée d'une région pleine présentant avantageusement un plan de coupe en forme de trèfle à quatre feuilles.

Lorsque le bloc composite comprend (avantageusement constitué de) une première pièce constituée d'un premier alliage, une deuxième pièce constituée d'un deuxième alliage, et une troisième pièce constituée d'un troisième alliage,
la première pièce ayant au moins une région creuse et étant en un premier alliage,
la deuxième pièce ayant au moins une région pleine et au moins une région creuse, et étant en un deuxième alliage distinct du premier alliage,
la troisième pièce ayant au moins une région pleine et étant en un troisième alliage distinct du premier alliage et/ou du deuxième alliage (avantageusement distinct du deuxième alliage ou distinct du premier alliage et du deuxième alliage),
le procédé de fabrication du bloc composite peut comprendre au moins les étapes suivantes :
   a) formation de la première pièce ayant au moins une région creuse, avantageusement par retrait d'au moins une région de matière,
   b) assemblage de la première pièce, d'une deuxième pièce ayant au moins une région pleine et au moins une région creuse, et d'une troisième pièce ayant au moins une région pleine, par insertion de la ou des régions pleines de la deuxième pièce dans la ou les régions creuses de la première pièce, et par insertion de la ou des régions pleines de la troisième pièce dans la ou les régions creuses de la deuxième pièce,
      la ou les régions pleines insérées dans la ou les régions creuses remplissant au moins en partie la ou les régions creuses par complémentarité de forme,
      l'assemblage étant réalisé, sans étirage des pièces, selon une technique choisie parmi le chassage (à chaud ou à froid), et le soudage (sans apport de matière),
   c) obtention d'un bloc composite comprenant (avantageusement constitué de) trois pièces en trois alliages, dont au moins deux sont distincts et de préférence de couleurs différentes.

Lorsque le bloc composite comprend (avantageusement constitué de) une première pièce constituée d'un premier alliage, une deuxième pièce constituée d'un deuxième alliage, et une troisième pièce constituée d'un troisième alliage,
la première pièce ayant au moins une région creuse et étant en un premier alliage,
la deuxième pièce ayant au moins une région pleine et au moins une région creuse, et étant en un deuxième alliage distinct du premier alliage,
la troisième pièce ayant au moins une région pleine et étant en un troisième alliage distinct du premier alliage et/ou du deuxième alliage (avantageusement distinct du deuxième alliage ou distinct du premier alliage et du deuxième alliage),
le procédé de fabrication du bloc composite peut comprendre au moins les étapes suivantes :
   a) formation de la première pièce ayant au moins une région creuse, avantageusement par retrait d'au moins une région de matière,
   b) assemblage de la première pièce et d'une deuxième pièce ayant au moins une région pleine et au moins une région creuse, par frittage d'une poudre (pulvérulente sans liant) du deuxième alliage, la poudre étant positionnée dans au moins une région creuse de la première pièce,
      assemblage de la deuxième pièce et d'une troisième pièce ayant au moins une région pleine, par frittage d'une poudre (pulvérulente sans liant) du troisième alliage, la poudre étant positionnée dans au moins une région creuse de la deuxième pièce,
      la ou les régions pleines (poudre du deuxième alliage et poudre du troisième alliage) insérées dans la ou les régions creuses (première et deuxième pièces) remplissant au moins en partie la ou les régions creuses par complémentarité de forme,
   c) obtention d'un bloc composite comprenant (avantageusement constitué de) trois pièces en trois alliages, dont au moins deux sont distincts et de préférence de couleurs différentes.

Le bloc composite est formé par l'assemblage d'au moins deux pièces en matériaux métalliques différents (alliages d'or, d'argent ou de platine), une des pièces comprenant au moins une région creuse (avantageusement obtenue par formation d'une région creuse, par exemple par retrait d'une région de matière correspondante) ; au moins une région pleine d'au moins une des pièces étant insérée dans une région creuse d'au moins une autre desdites pièces, la ou les régions pleines insérées dans une région creuse remplissent au moins en partie ladite région creuse par complémentarité de forme, et dans lequel les pièces sont assemblées entre elles selon une technique choisie parmi le chassage, le frittage de poudre pulvérulente sans liant, et le soudage.

Selon d'autres aspects, le bloc composite selon l'invention peut présenter les différentes caractéristiques suivantes prises seules ou selon leurs combinaisons techniquement possibles :
- au moins deux des pièces comprennent au moins une région creuse (par exemple obtenue par retrait d'une région de matière correspondante), et au moins une région pleine ; au moins une région pleine de la première pièce étant insérée dans une région creuse de la deuxième pièce, ladite ou lesdites régions pleines remplissant au moins en partie ladite ou lesdites régions creuses par complémentarité de forme ;
- chacune des pièces comprend au moins une région creuse (par exemple obtenue par retrait d'une région de matière correspondante), et au moins une région pleine ; au moins une région pleine de chacune des pièces étant insérée dans une région creuse de chacune des pièces, lesdites régions pleines remplissant au moins en partie lesdites régions creuses par complémentarité de forme ;
- au moins un secteur plein d'au moins une des pièces et au moins un secteur creux d'au moins une autre desdites pièces présentent deux à deux des formes complémentaires, de sorte qu'après insertion, le secteur creux remplit le secteur creux par complémentarité de forme ;
- les pièces sont assemblées entre elles par soudage d'au moins une région pleine d'une des pièces avec une région pleine adjacente d'une autre des pièces ;
- les pièces se présentent sous la forme de barreaux cylindriques, dont les régions creuses sont des secteurs creux qui s'étendent selon une hauteur des barreaux cylindriques, bordés au moins en partie par des secteurs pleins constituant les régions pleines ;
- les pièces (1, 2) présentent une section ou un plan de coupe en forme de trèfle à quatre feuilles,
- au moins l'une des pièces est composée d'au moins deux matériaux métalliques différents, et au moins une autre pièce est composée d'au moins un matériau métallique différent de ceux de ladite une des pièces, le bloc composite étant composé d'au moins trois matériaux métalliques différents ;
- les matériaux métalliques des pièces sont de couleurs différentes.

La présente invention concerne également un procédé de fabrication d'une pièce de joaillerie ou d'horlogerie.

Selon un mode de réalisation, la formation de la région creuse (par exemple par retrait de matière, notamment par fabrication soustractive) est réalisée par l'une des techniques suivantes : usinage, de préférence un usinage par commande numérique par ordinateur ; électroérosion par enfonçage ; découpe laser ; découpe par jet d'eau ; découpe par électroérosion à fil ; découpe à la scie à chantourner ; découpe en estampage ou outil de frappe. La formation de la région creuse peut également être réalisée par l'une des techniques suivantes : fabrication additive (par exemple l'impression tridimensionnelle, fonte à cire perdue, coulée continue, électroformage...

Selon un mode de réalisation, le procédé peut en outre comprendre, postérieurement à la formation de la région creuse (par exemple par retrait de matière, notamment par fabrication soustractive, ou par ajout de matière, notamment par fabrication additive) une étape de terminaison de la pièce de joaillerie ou d'horlogerie, choisie parmi : le guillochage, le polissage, le satinage... Dans le cas de la fabrication soustractive, l'étape de terminaison peut également inclure au moins l'une des techniques suivantes : la texturation, le brossage, et le sablage/microbillage. La fabrication additive peut être réalisée par l'une des techniques suivantes : ajout d'éléments en métal (notamment précieux) par fabrication additive tridimensionnelle, brasage, soudure ou rhodiage, ajout d'éléments non métallique, tels que l'émaillage, la laque, le sertissage de pierres...

L'invention concerne également une pièce de joaillerie ou d'horlogerie, comprenant un bloc composite tel que décrit précédemment, par exemple traité par fabrication soustractive selon le procédé précédent, comprenant sur au moins une face transversale un motif formé par retrait de matière du bloc composite depuis ladite face transversale, dans une région de recouvrement qui présente des régions pleines d'au moins deux pièces.

Le procédé de fabrication d'une pièce de joaillerie ou d'horlogerie, peut comprendre les étapes suivantes :
- fourniture d'un bloc composite tel que décrit ci-dessus, ou obtenu selon le procédé de fabrication décrit ci-dessus,
- traitement du bloc composite par fabrication soustractive, comprenant une étape de formation d'un motif par retrait de matière depuis une face transversale du bloc composite, dans une région de recouvrement qui présente des régions pleines d'au moins deux des pièces, pour obtenir la pièce de joaillerie ou d'horlogerie.

Le retrait de matière par fabrication soustractive est avantageusement réalisé par l'une des techniques suivantes : usinage, de préférence un usinage par commande numérique par ordinateur ; électroérosion par enfonçage ; découpe laser ; découpe par jet d'eau ; découpe par électroérosion à fil ; découpe à la scie à chantourner ; découpe en estampage ou outil de frappe.

Le procédé de fabrication d'une pièce de joaillerie ou d'horlogerie peut avantageusement comprendre, postérieurement au retrait de matière par fabrication soustractive, une étape de terminaison de la pièce de joaillerie ou d'horlogerie, avantageusement par guillochage.

De préférence, le motif de la pièce de joaillerie ou d'horlogerie comprend une terminaison choisie parmi : un guilloché, le polissage, le satinage ... La pièce de joaillerie ou d'horlogerie comprend préférentiellement un motif à la forme d'un trèfle et comprenant une terminaison guillochée.

La pièce de joaillerie ou d'horlogerie est avantageusement choisie parmi : un cadran de montre ; un décor, par exemple un décor de bague, de boucle d'oreille ou d'une broche ; un maillon de bracelet ; un pendentif ; un bouton de manchette ; une lunette de montre.

De manière préférée, la pièce de joaillerie ou d'horlogerie présente une épaisseur comprise entre 0,5 et 5 mm. Avantageusement, elle s'inscrit dans un diamètre de 5 à 50 mm.

### Description des figures

D'autres avantages et caractéristiques de l'invention apparaîtront à la lecture de la description suivante donnée à titre d'exemple illustratif et non limitatif, en référence aux figures annexées suivantes :
La figure 1 est une vue en perspective de la première pièce en matériau métallique selon un premier mode de réalisation, qui se présente sous la forme d'un trèfle à quatre feuilles, comprenant plusieurs régions creuses avantageusement obtenues après retrait de plusieurs régions, dites « secteurs ».
La figure 2 est une vue en perspective de la deuxième pièce en matériau métallique selon un premier mode de réalisation, qui se présente sous la forme d'un trèfle à quatre feuilles, comprenant plusieurs régions creuses avantageusement obtenues après retrait de plusieurs secteurs.
La figure 3 est une vue en perspective d'un bloc composite selon le premier mode de réalisation, formé par l'assemblage des première et deuxièmes pièces des figures 1 et 2.
La figure 4 est une vue en perspective d'une pièce de joaillerie ou d'horlogerie, obtenue par usinage d'une section du bloc composite de la figure 3 pour former un guilloché.
La figure 5 est une vue en perspective de la première pièce en matériau métallique selon un deuxième mode de réalisation, qui se présente sous la forme d'un cylindre, comprenant plusieurs régions creuses avantageusement obtenues après retrait de plusieurs régions, dites « secteurs ».
La figure 6 est une vue en perspective de la deuxième pièce en matériau métallique selon un deuxième mode de réalisation, qui se présente sous la forme d'un cylindre, comprenant plusieurs régions creuses avantageusement obtenues après retrait de plusieurs secteurs.
La figure 7 est une vue de côté des première et deuxième pièces cylindriques des figures 5 et 6 positionnées en vis-à-vis selon leur axe respectif.
La figure 8 est une vue en perspective d'un bloc composite selon le deuxième mode de réalisation, formé par l'assemblage des première et deuxièmes pièces des figures 5 et 6.
La figure 9 est une vue de face d'une section transversale du bloc composite de la figure 8, laquelle illustre une alternance des secteurs pleins des matériaux métalliques des première et deuxième pièces constitutives du bloc composite.
La figure 10 est une vue en perspective du bloc composite de la figure 8, dont une face transversale a été usinée pour former une pièce de joaillerie ou d'horlogerie.
La figure 11 est une vue en perspective de la pièce de joaillerie ou d'horlogerie de la figure 10, après réalisation d'un guilloché.
La figure 12 est une illustration de l'assemblage des première et deuxièmes pièces (jetons en forme de trèfle) pour former un bloc composite.
La figure 13 aux vues d'un bloc composite, de la gauche vers la droite : face arrière, de côté, face avant en perspective et face arrière en perspective.

### Description détaillée de modes de réalisation de l'invention

L'invention concerne un procédé de fabrication d'un bloc composite par assemblage de deux pièces en matériaux métalliques différents. Ce procédé permet d'obtenir un bloc composite qui convient parfaitement, en tant que matériau de départ, à la fabrication d'une pièce de joaillerie ou d'horlogerie.

Les matériaux peuvent différer notamment par la nature de leurs éléments constitutifs et/ou par les teneurs relatives de leurs éléments constitutifs. Cette différence de matériaux peut en particulier se traduire par une différence de couleur, de sorte à obtenir un bloc composite puis une pièce de joaillerie ou d'horlogerie multicolore, par exemple bicolore, tricolore, ou quadricolore.

Les matériaux constitutifs des pièces comprennent au moins un métal précieux choisi parmi un alliage d'or, d'argent, ou de platine.

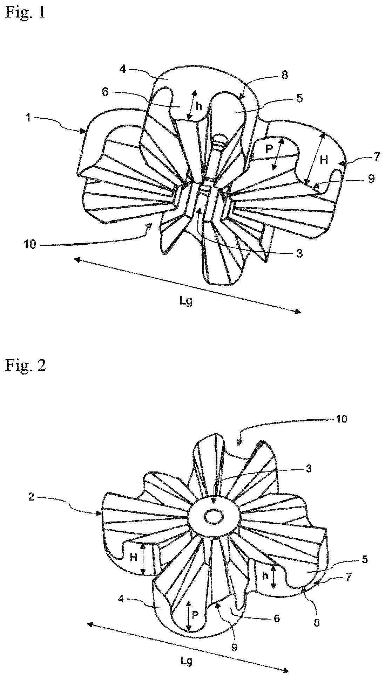

Un premier mode de réalisation d'un tel procédé selon l'invention est illustré en détails sur les figures 1 à 4.

Selon ce premier mode de réalisation, en référence aux figures 1 et 2, les première et deuxième pièces 1, 2 en matériaux métalliques se présentent sous la forme de trèfles à quatre feuilles, autrement dit une structure à quatre lobes de taille similaire, de révolution selon un axe 3. Les première et deuxième pièces 1, 2 présentent une largeur Lg (ou diamètre) perpendiculaire à l'axe 3 et une hauteur H parallèle à l'axe 3.

Cette forme de trèfle peut être obtenue par exemple par usinage d'un cylindre.

Conformément au procédé de l'invention, on réalise des régions creuses, avantageusement par retrait d'au moins une région de matière en creusant dans les première et deuxième pièces 1, 2. Dans le premier mode de réalisation, les régions de matière sont des secteurs en trois dimensions, dits plus simplement « secteurs ». La réalisation des régions creuses, avantageusement par retrait de matière, permet ainsi de former, sur chaque pièce, au moins un secteur creux 5 qui est bordé par au moins un secteur plein 6. On obtient les pièces représentées sur les figures 1 et 2 respectivement.

Sur les figures 1 et 2, les secteurs creux 5 s'étendent selon la largeur Lg de chaque pièce 1, 2, depuis l'axe 3 jusqu'à la périphérie 4 (ou circonférence) de la pièce. Ils forment des parts en trois dimensions de section (ou profil) sensiblement triangulaire.

Les secteurs creux 5 sont formés, avantageusement creusés par retrait de matière, dans la hauteur H de la pièce, c'est-à-dire selon une direction parallèle à l'axe 3. De manière avantageuse, la formation de la région creuse (avantageusement par retrait de matière) n'est pas réalisé dans toute la hauteur H de la pièce, de sorte à laisser une portion de pièce pleine 7 à l'extrémité de ladite pièce. Ceci permet de former ultérieurement un bloc composite 20 dont les faces transversales 21 sont pleines. Ces faces pleines 21 servent de butée axiale lors de l'insertion des pièces 1, 2 l'une dans l'autre, facilitant ainsi la fabrication du bloc composite 20 et rendant ce dernier plus stable avant la solidarisation des pièces entre elles, ces différentes étapes étant décrites dans la suite du présent texte.

On précise que la profondeur de la région creuse (avantageusement formée par retrait de matière) peut varier d'un secteur à un autre, de sorte que les secteurs creux 5 obtenus peuvent avoir des profondeurs P différentes, dans une direction parallèle à l'axe 3. Dans ce cas, la portion de pièce pleine 7 en forme de trèfle à l'extrémité de ladite pièce présente elle-même une hauteur qui varie le long de sa circonférence.

Par ailleurs, la profondeur de la région creuse (avantageusement formée par retrait de matière) peut varier, au sein d'un même secteur, selon le rayon entre l'axe 3 et la périphérie 4 de la pièce 1, 2, ainsi que selon la position angulaire au sein du secteur. En d'autres termes, les secteurs peuvent être creusés de manière irrégulière. Les secteurs creux 5 obtenus peuvent ainsi chacun présenter une profondeur P variable entre l'axe 3 et la périphérie 4 de la pièce et/ou selon la position angulaire au sein du secteur creux 5. Ceci est visible sur les figures 1 et 2, où les secteurs creux 5 présentent un profil 8 en forme de « U » dont le fond est arrondi et les extrémités sont évasées. Les secteurs pleins 6, qui bordent les secteurs creux 5 en les séparant les uns des autres, présentent quant à eux un profil 9 en forme de « U » dont le fond est droit, ce dernier étant découpé dans la matière pour obtenir une face exposée 10 de la pièce 1, 2 qui soit plane.

L'axe 3 de la première pièce 1 est également creusé, formant ainsi un axe dit « axe creux ». En revanche, l'axe de la deuxième pièce 2 n'est pas creusé, et reste plein.

De manière avantageuse, la face exposée 10 de chacune des pièces 1, 2 présente une structure en forme d'étoile, dont les branches sont les secteurs pleins 6 qui bordent les secteurs creux 5.

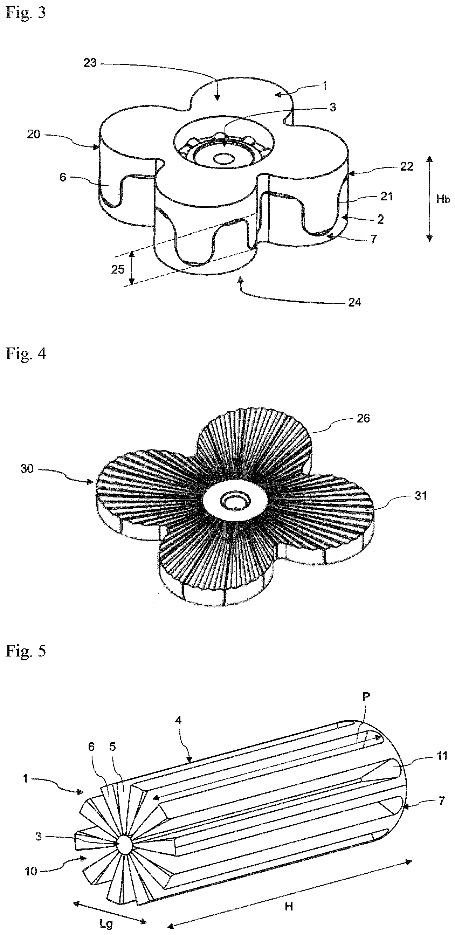

Comme l'illustrent les figures 1 à 3, les secteurs pleins 6 de la première pièce 1 et les secteurs creux 5 de la deuxième pièce 2 présentent deux à deux des formes complémentaires. De même, les secteurs pleins 6 de la deuxième pièce 2 et les secteurs creux 5 de la première pièce 1 présentent deux à deux des formes complémentaires. Cette complémentarité des secteurs pleins et creux des deux pièces permet leur assemblage par insertion, pour obtenir l'assemblage de la figure 3, appelé « bloc composite » 20.

Lorsque la profondeur de la région creuse (avantageusement formée par retrait de matière) varie au sein des secteurs creux 5 des pièces 1, 2, que ce soit selon le rayon ou selon la position angulaire, ces variations sont complémentaires entre les deux pièces, afin de permette l'insertion des secteurs pleins 6 de l'une des pièces dans les secteurs creux 5 de l'autre pièce lors de leur assemblage.

De manière avantageuse, l'axe 3 creux de la première pièce 1 présente une forme complémentaire à celle de l'axe 3 plein de la deuxième pièce 2. Durant l'étape d'assemblage des pièce 1, 2, l'arbre plein de la deuxième pièce vient ainsi s'insérer dans l'axe creux de la première pièce.

En référence à la figure 3, le bloc composite 20 est composé des deux pièces imbriquées l'une dans l'autre, la première pièce 1 étant positionné sur la deuxième pièce 2 sur la vue en perspective représentée.

Sur la figure 3, on observe distinctement un liseré 21 de forme sinusoïdale qui serpente le long de la périphérie 22 du bloc composite 20, à la jonction de la première et de la deuxième pièce 1, 2, résultant de la complémentarité desdites pièces.

Les pièces 1, 2 sont ensuite solidarisées ensemble afin d'assurer la cohésion structurelle du bloc composite 20.

De préférence, l'assemblage des pièces l'une à l'autre est réalisé par soudage. Dans ce cas, on soude préférentiellement les secteurs pleins 6 de la première pièce 1 avec les secteurs pleins 6 adjacents de la deuxième pièce 2.

De manière avantageuse, on peut également fixer l'arbre 3 de la première pièce 1 avec l'arbre de la première pièce 2, afin de renforcer davantage la cohésion structurelle du bloc composite. La fixation des arbres 3 est de préférence réalisée par soudure.

A partir de ce bloc composite 20, l'invention propose un procédé permettant de fabrication d'une pièce de joaillerie ou d'horlogerie 30, par traitement dudit traitement du bloc composite 20 par fabrication soustractive.

De manière connue en soi, la fabrication soustractive permet de transformer un bloc de matériau solide par retrait progressif de matière afin d'arriver à la forme désirée d'une pièce.

Dans le cadre de l'invention, le traitement du bloc composite 20 par fabrication soustractive comprend une étape consistant à creuser le matériau métallique dans la hauteur Hb du bloc composite 20 depuis au moins une face transversale 23 de celui-ci, ou depuis les deux faces transversales 23, 24, afin d'obtenir la pièce de joaillerie ou d'horlogerie 30 désirée, illustrée sur la figure 4.

La face transversale 23 à creuser peut être une face libre du bloc composite, c'est-à-dire le verso de l'une ou de l'autre des première et deuxième pièces 1, 2 formant le bloc composite, ou bien être issue d'une découpe préalable du bloc composite. Il est par exemple possible de découper une section à l'extrémité du bloc composite pour la retirer, et de traiter la nouvelle face transversale rendue libre.

Dans tous les cas, on creuse le bloc composite 20 au moins jusqu'à une région dite de recouvrement 25, au niveau de laquelle se présente une alternance des première et deuxième pièces 1, 2, plus précisément de leurs secteurs angulaires pleins, le long de la périphérie 22 du bloc composite.

Cette région de recouvrement 24 est ainsi délimitée, dans la hauteur Hb du bloc composite 20, par le liseré 21.

En retirant de la matière jusqu'à la région de recouvrement 25, on forme un motif 26 caractéristique de la pièce de joaillerie ou d'horlogerie 30 que l'on souhaite fabriquer. Sur la figure 4, le motif 26 de la pièce 30 est un trèfle à quatre feuilles de faible hauteur, obtenu en creusant les deux faces transversales 23, 24 jusqu'à la région de recouvrement 25.

La formation de la région creuse (avantageusement par retrait de matière) peut être réalisé par toute technique de fabrication connue, notamment par moulage ou par fabrication soustractive. De préférence, la technique de fabrication soustractive est choisie par l'une des techniques suivantes : usinage ; électroérosion par enfonçage ; découpe laser ; découpe par jet d'eau ; découpe par électroérosion à fil ; découpe à la scie à chantourner ; découpe en estampage ou outil de frappe. La formation de la région creuse peut également être réalisée par l'une des techniques suivantes : fabrication additive (par exemple l'impression tridimensionnelle, fonte à cire perdue, coulée continue, électroformage... Lorsque l'usinage est choisi, il s'agir de préférence d'un usinage par commande numérique par ordinateur, ou « computer numerical control » en anglais (acronyme CMC).

De préférence, après la formation de la région creuse (avantageusement formée par retrait de matière par fabrication soustractive), on réalise une étape de terminaison de la pièce de joaillerie ou d'horlogerie 30. Cette étape permet de former une terminaison sur le motif 26 préalablement réalisé afin de conférer un aspect esthétique particulier audit motif 26, plus spécifiquement des caractéristiques visuelles conformes aux réalisations de l'industrie du luxe.

La technique de terminaison est de préférence au moins une des techniques suivantes : le guillochage, le polissage, le satinage... Dans le cas de la fabrication soustractive, l'étape de terminaison peut également inclure au moins une des techniques suivantes : la texturation, le brossage, et le sablage/microbillage. La fabrication additive peut être réalisée par l'une des techniques suivantes : ajout d'éléments en métal (notamment précieux) par fabrication additive tridimensionnelle, brasage, soudure ou rhodiage, ajout d'éléments non métallique, tels que l'émaillage, la laque, le sertissage de pierres...

Dans le cas présent, on a réalisé un guillochage du motif 26 en forme de trèfle, pour obtenir un trèfle muni d'une terminaison de type guilloché 31, tel que représenté sur la figure 4.

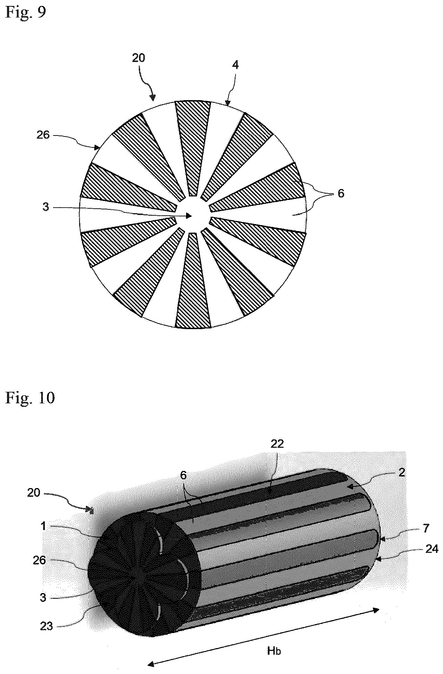

Un deuxième mode de réalisation du procédé de fabrication d'un bloc composite selon l'invention est illustré en détails sur les figures 9 à 10.

Selon ce deuxième mode de réalisation, les première et deuxième pièces 1, 2 en matériaux métalliques se présentent sous la forme de barreaux cylindriques de révolution selon un axe 3. Les première et deuxième pièces 1, 2 présentent une largeur Lg (le diamètre du cylindre) perpendiculaire à l'axe 3 et une hauteur H parallèle à l'axe 3.

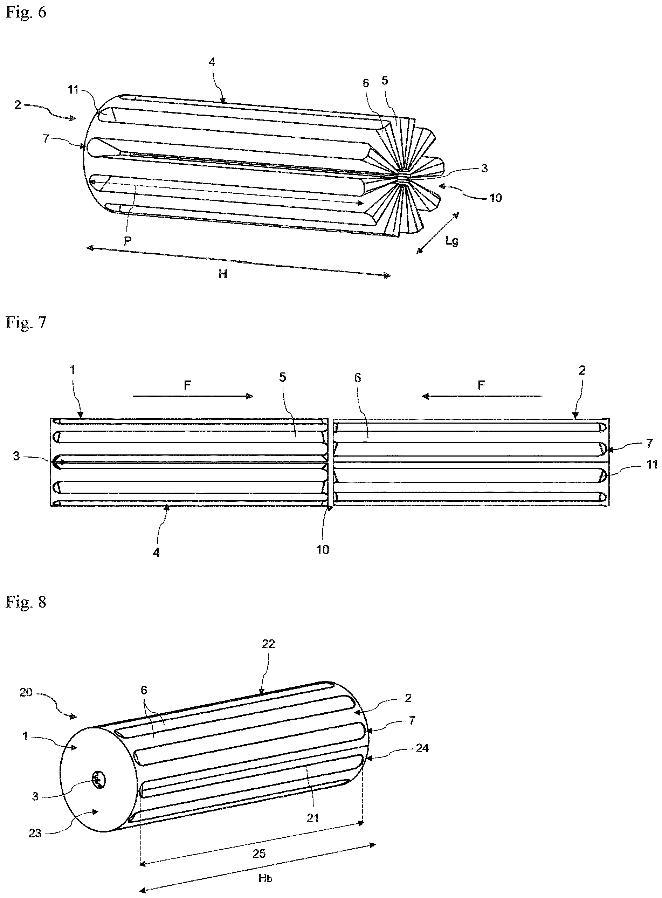

On retire au moins un secteur dans chacune des première et deuxième pièces 1, 2, pour former, sur chaque pièce, au moins un secteur creux 5 qui est bordé par au moins un secteur plein 6. On obtient ainsi les pièces représentées sur les figures 5 et 6 respectivement.

Sur les figures 5 et 6, les secteurs creux 5 s'étendent, selon la largeur Lg de chaque pièce cylindrique 1, 2, depuis l'axe jusqu'à la périphérie 4 (la circonférence du cylindre) de la pièce. Ils forment ainsi des parts en trois dimensions de profil sensiblement triangulaire.

Comme dans le cas du premier mode de réalisation, les secteurs creux 5 sont formés, avantageusement par retrait de matière, dans la hauteur H de la pièce, à savoir dans une direction parallèle à l'axe 3, depuis la périphérie 4 vers l'axe 3 du cylindre (un rayon du cylindre). De manière avantageuse, la région creuse (avantageusement formée par retrait) n'est pas réalisée dans toute la hauteur H du cylindre, mais selon une profondeur P, de sorte à laisser une portion de cylindre pleine 7 à l'extrémité dudit cylindre.

Lors de la fabrication des pièces cylindriques 1, 2 des figures 5 et 6, la région creuse (avantageusement formée par retrait de matière) a été réalisée de manière identique pour tous les secteurs creux 5, dans leur hauteur H et dans leur largeur Lg. Tous les secteurs creux 5 s'étendent ainsi sur la quasi-totalité de la hauteur du cylindre, et présentent un fond 11 en forme de « U », jouxtant la portion d'extrémité laissée pleine 7. Ils s'étendent de manière homogène sur la totalité du rayon du cylindre, c'est-à-dire depuis l'axe 3 jusqu'à la circonférence 4 du cylindre.

Les secteurs pleins 6, qui bordent les secteurs creux 5 en les séparant les uns des autres, présentent quant à eux une section triangulaire isocèle.

L'axe 3 de la deuxième pièce cylindrique 2 est également creusé. En revanche, l'axe de la première pièce cylindrique 1 n'est pas creusé, et reste plein.

De manière avantageuse, la face exposée 10 de chacune des pièces cylindriques 1, 2 présente une structure en forme d'étoile, dont les branches sont les secteurs pleins 6 qui bordent les secteurs creux 5.

Comme l'illustrent les figures 5 à 7, les secteurs pleins 6 de la première pièce 1 et les secteurs creux 5 de la deuxième pièce 2 présentent deux à deux des formes complémentaires. De même, les secteurs pleins 6 de la deuxième pièce 2 et les secteurs creux 5 de la première pièce 1 présentent deux à deux des formes complémentaires. Cette complémentarité des secteurs pleins et creux des deux pièces permet leur assemblage par insertion, pour obtenir le bloc composite de la figure 8.

De manière avantageuse, l'axe 3 plein de la première pièce 1 est inséré dans l'axe 3 creux de la deuxième pièce 2. Au sens de l'invention, l'axe plein est considéré comme une région pleine et l'axe creux est considéré comme une région creuse.

Préalablement à leur assemblage, les pièces cylindriques 1, 2 sont positionnées l'une face à l'autre, leur face transversale étant en vis-à-vis, selon la figure 7.

Les pièces 1, 2 sont ensuite rapprochées et assemblées l'une dans l'autre de manière à les imbriquer, selon le sens des flèches F. Pendant l'assemblage, les secteurs pleins 6 de l'une des pièces coulissent dans les secteurs creux 5 de formes complémentaires de l'autre pièce, jusqu'à venir buter contre la portion de cylindre pleine 7.

En référence à la figure 8, le bloc composite 20 est composé des deux pièces 1, 2 imbriquées l'une dans l'autre.

De manière similaire au premier mode de réalisation, on observe un liseré 21 de forme sinusoïdale qui serpente le long de la périphérie 22 du bloc composite 20, à la jonction de la première et de la deuxième pièce, résultant de la complémentarité desdites pièces.

Les pièces 1, 2 sont ensuite solidarisées entre elles, de préférence par soudage, afin d'assurer la cohésion structurelle du bloc composite.

A partir de ce bloc composite 20, on fabrique une pièce de joaillerie ou d'horlogerie 30 par fabrication soustractive.

Pour ce faire, on creuse le matériau métallique dans la hauteur Hb du bloc composite 20 depuis une face transversale 23 de celui-ci, ou les deux faces transversales 23, 24, afin d'obtenir la pièce de joaillerie ou d'horlogerie désirée.

La face transversale 23 à creuser peut être une face libre du cylindre composite, c'est-à-dire l'une de ses deux face transversales 23, 24, ou bien être issue d'une découpe du cylindre composite. Il est par exemple possible de découper une section à l'extrémité du cylindre 20 pour la retirer, et de traiter la nouvelle face transversale rendue libre.

Dans tous les cas, on creuse le cylindre composite 20 au moins jusqu'à la région de recouvrement 25 délimitée par le liseré 21, au niveau de laquelle se présente une alternance des première et deuxième pièces 1, 2, le long de la périphérie 22 du cylindre.

Une région creuse (avantageusement formée par retrait de la matière) homogène en profondeur depuis une face transversale 23 pleine jusqu'à la région de recouvrement 25 conduit à exposer ladite région de recouvrement, dont une section 26 est représentée sur la figure 9.

Sur cette figure 9, on note l'alternance, autour de l'axe 3, des deux matériaux métalliques des deux pièces cylindriques 1, 2 initiales. La face est donc bi-matériaux. Le matériau de la première pièce métallique est représenté hachuré, tandis que le matériau de la deuxième pièce est représenté uni. Si les matériaux métalliques sont de couleurs différentes, la face est bicolore. Elle peut être tricolore, quadricolore, ou davantage, en fonction du nombre de matériaux différents des pièces métalliques 1, 2 initiales.

A partir de la surface de la figure 9, on forme par fabrication soustractive un motif 26 caractéristique de la pièce de joaillerie ou d'horlogerie que l'on souhaite fabriquer. Un tel motif 26 est illustré sur l'extrémité du cylindre de la figure 9 ainsi que sur la figure 10, celui-ci prenant la forme d'un trèfle à quatre feuilles.

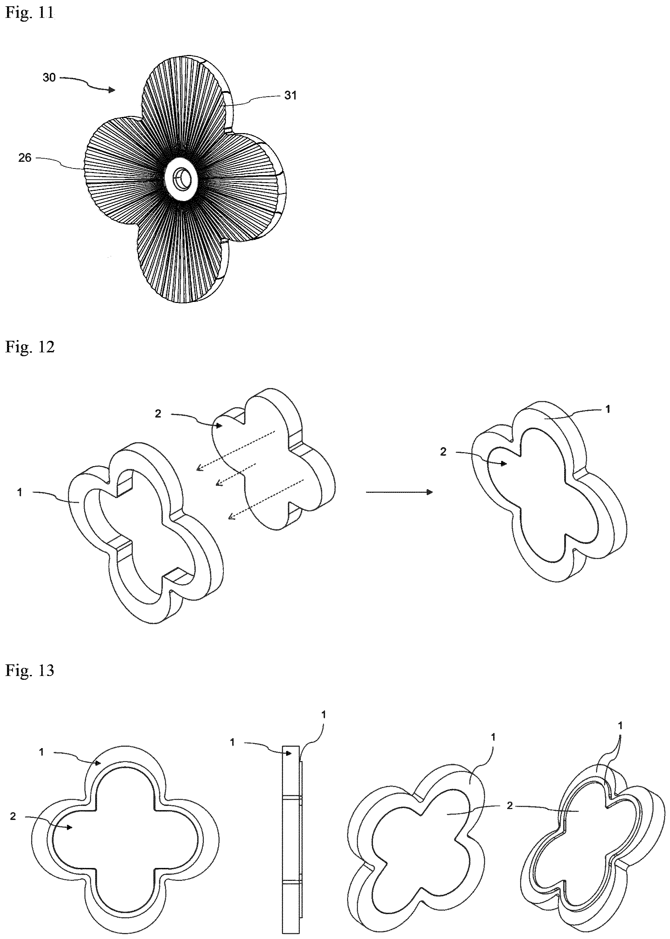

Une étape de terminaison permet alors de réaliser une terminaison, telle qu'un guilloché 31, sur le trèfle. La pièce de joaillerie ou d'horlogerie obtenue en fin de procédé est représentée sur la figure 11.

La figure 12 illustre l'assemblage des première 1 et deuxièmes 2 pièces (jetons en forme de trèfle) pour former un bloc composite.

La figure 13 illustre un bloc composite (jeton en forme de trèfle), dont la pièce 1 comporte un rebord. Lors de l'assemblage des pièces, la pièce 2 est insérée à l'intérieur de la pièce 1. Dans le cas d'un assemblage par soudage, le rebord sert notamment à limiter un débordement de matière en fusion. Ce rebord peut faire partie de la pièce de joaillerie ou d'horlogerie ou uniquement à limiter un débordement de matière en fusion, le rebord est alors retiré lors d'une opération postérieure à l'assemblage.

Sur les figures 12 et 13 les pièces 1 et 2 présentent, chacune, un plan de coupe en forme de trèfle à quatre feuilles.

## Revendications

1. Procédé de fabrication d'un bloc composite (20) en alliage choisi dans le groupe constitué par : les alliages d'or, les alliages d'argent, et les alliages de platine,
le bloc composite étant formé par assemblage d'au moins deux pièces (1, 2) en matériaux métalliques différents choisis parmi lesdits alliages,
au moins une des deux pièces (1, 2) ayant au moins une région creuse (5), et au moins une des deux pièces (1, 2) ayant au moins une région pleine (6),
le procédé comprenant les étapes suivantes :
a) formation de la au moins une des pièces (1, 2) ayant au moins une région creuse (5),
b) assemblage des au moins deux pièces (1, 2), par insertion d'au moins une région pleine (6) d'au moins une des pièces (1, 2) dans au moins une région creuse (5) d'au moins une autre desdites pièces (1, 2), la ou les régions pleines (6) insérées dans au moins une région creuse (5) remplissant au moins en partie ladite au moins une région creuse (5) par complémentarité de forme,
l'assemblage étant réalisé, sans étirage des pièces (1, 2), selon une technique choisie parmi le chassage, le frittage de poudre pulvérulente sans liant, et le soudage,
c) obtention d'un bloc composite.

2. Procédé selon la revendication 1, l'étape a) étant réalisée par retrait d'au moins une région de matière dans au moins deux des pièces (1, 2), dites première pièce (1) et deuxième pièce (2),
l'étape b) d'assemblage étant réalisée par insertion d'au moins une région pleine (6) de la première pièce (1) dans au moins une région creuse (5) de la deuxième pièce (1, 2), ladite ou lesdites régions pleines (6) remplissant au moins en partie ladite ou lesdites régions creuses (5) par complémentarité de forme.

3. Procédé selon la revendication 1, l'étape a) étant réalisée par retrait réalisée dans chacune des pièces (1, 2) qui sont ultérieurement assemblées et fixées entre elles, de sorte à former au moins une région creuse (5) bordée partiellement ou totalement par au moins une région pleine (6),
l'étape b) comprenant l'insertion d'au moins une région pleine (6) de chacune des pièces (1, 2) dans au moins une région creuse (5) de chacune des pièces (1, 2), lesdites régions pleines (6) remplissant au moins en partie lesdites régions creuses (5) par complémentarité de forme.

4. Procédé selon l'une quelconque des revendications précédentes, dans lequel au moins une région pleine (6) d'au moins une des pièces (1, 2) et au moins une région creuse (5) d'au moins une autre desdites pièces (1, 2) présentent deux à deux des formes complémentaires, de sorte qu'après insertion, la région pleine (6) remplit la région creuse (5) par complémentarité de forme.

5. Procédé selon l'une quelconque des revendications précédentes, dans lequel l'étape b) d'assemblage des pièces (1, 2) entre elles est réalisée par soudage d'au moins une région pleine (6) d'une des pièces (1, 2) avec une région pleine (6) adjacente d'une autre des pièces (1, 2).

6. Procédé selon la revendication 5, dans lequel le soudage est réalisé à une température inférieure d'au moins 50°C par rapport à la température de fusion du matériau métallique à plus haut point de fusion, la température du soudage est maintenue pendant au moins une minute, préférentiellement au moins 2 minutes, plus préférentiellement au moins 3 minutes.

7. Procédé selon l'une quelconque des revendications 1 à 4, dans lequel l'étape b) d'assemblage est réalisée par frittage de poudre sans liant, au moins une région pleine (6) d'au moins une des pièces (1, 2) étant constituée de poudre d'alliage frittée.

8. Procédé selon l'une quelconque des revendications 1 à 6, dans lequel les pièces (1, 2) présentent une section ou un plan de coupe en forme de trèfle à quatre feuilles.

9. Procédé selon l'une quelconque des revendications précédentes, dans lequel au moins l'une des pièces (1, 2) est composée d'au moins deux matériaux métalliques différents, et au moins une autre des pièce (1, 2) est composée d'au moins un matériau métallique différent de ceux de ladite une des pièces (1, 2), le bloc composite (20) obtenu étant composé d'au moins trois matériaux métalliques différents.

10. Procédé selon l'une quelconque des revendications précédentes, dans lequel les matériaux métalliques des pièces (1, 2) sont de couleurs différentes.

11. Procédé selon l'une quelconque des revendications précédentes, dans lequel le bloc composite est constitué d'une première pièce constituée d'un premier alliage et d'une deuxième pièce constituée d'un deuxième alliage,
la première pièce ayant au moins une région creuse et étant en un premier alliage, et la deuxième pièce ayant au moins une région pleine et étant en un deuxième alliage distinct du premier alliage,
le procédé de fabrication du bloc composite comprenant au moins les étapes suivantes :
a) formation de la première pièce ayant au moins une région creuse, avantageusement par retrait d'au moins une région de matière,
b) assemblage de la première pièce et d'une deuxième pièce ayant au moins une région pleine, par insertion de la ou des régions pleines de la deuxième pièce dans la ou les régions creuses de la première pièce, la ou les régions pleines insérées dans la ou les régions creuses remplissant au moins en partie la ou les régions creuses par complémentarité de forme,
l'assemblage étant réalisé, sans étirage des pièces, selon une technique choisie parmi le chassage, le frittage de poudre pulvérulente sans liant, et le soudage sans apport de matière,
c) obtention d'un bloc composite constitué de deux pièces en deux alliages distincts, de préférence de couleurs différentes.

12. Procédé selon l'une quelconque des revendications 1 à 10 sans la revendication 7, dans lequel le bloc composite est constitué d'une première pièce constituée d'un premier alliage, d'une deuxième pièce constituée d'un deuxième alliage, et d'une troisième pièce constituée d'un troisième alliage,
la première pièce ayant au moins une région creuse et étant en un premier alliage,
la deuxième pièce ayant au moins une région pleine et au moins une région creuse, et étant en un deuxième alliage distinct du premier alliage,
la troisième pièce ayant au moins une région pleine et étant en un troisième alliage distinct du premier alliage et/ou du deuxième alliage,
le procédé de fabrication du bloc composite comprenant au moins les étapes suivantes :
a) formation de la première pièce ayant au moins une région creuse, avantageusement par retrait d'au moins une région de matière,
b) assemblage de la première pièce, d'une deuxième pièce ayant au moins une région pleine et au moins une région creuse, et d'une troisième pièce ayant au moins une région pleine, par insertion de la ou des régions pleines de la deuxième pièce dans la ou les régions creuses de la première pièce, et par insertion de la ou des régions pleines de la troisième pièce dans la ou les régions creuses de la deuxième pièce,
la ou les régions pleines insérées dans la ou les régions creuses remplissant au moins en partie la ou les régions creuses par complémentarité de forme,
l'assemblage étant réalisé, sans étirage des pièces, selon une technique choisie parmi le chassage et le soudage sans apport de matière,
c) obtention d'un bloc composite constitué de trois pièces en trois alliages, dont au moins deux sont distincts et de préférence de couleurs différentes.

13. Procédé selon l'une quelconque des revendications 1 à 10 sans les revendication 5 et 6, dans lequel le bloc composite est constitué d'une première pièce constituée d'un premier alliage, d'une deuxième pièce constituée d'un deuxième alliage, et d'une troisième pièce constituée d'un troisième alliage,
la première pièce ayant au moins une région creuse et étant en un premier alliage,
la deuxième pièce ayant au moins une région pleine et au moins une région creuse, et étant en un deuxième alliage distinct du premier alliage,
la troisième pièce ayant au moins une région pleine et étant en un troisième alliage distinct du premier alliage et/ou du deuxième alliage,
le procédé de fabrication du bloc composite comprenant au moins les étapes suivantes :
a) formation de la première pièce ayant au moins une région creuse, avantageusement par retrait d'au moins une région de matière,
b) assemblage de la première pièce et d'une deuxième pièce ayant au moins une région pleine et au moins une région creuse, par frittage d'une poudre pulvérulente sans liant du deuxième alliage, la poudre étant positionnée dans au moins une région creuse de la première pièce,
assemblage de la deuxième pièce et d'une troisième pièce ayant au moins une région pleine, par frittage d'une poudre pulvérulente sans liant du troisième alliage, la poudre étant positionnée dans au moins une région creuse de la deuxième pièce,
la ou les régions pleines insérées dans la ou les régions creuses remplissant au moins en partie la ou les régions creuses par complémentarité de forme,
c) obtention d'un bloc composite constitué de trois pièces en trois alliages, dont au moins deux sont distincts et de préférence de couleurs différentes.

14. Procédé de fabrication d'une pièce de joaillerie ou d'horlogerie (30), comprenant les étapes suivantes :
- fourniture d'un bloc composite (20) obtenu par un procédé de fabrication selon l'une des revendications 1 à 13,
- traitement du bloc composite (20) par fabrication soustractive, comprenant une étape de formation d'un motif (26) par retrait de matière depuis une face transversale (10) du bloc composite (20), dans une région de recouvrement (25) qui présente des régions pleines (6) d'au moins deux des pièces (1, 2), pour obtenir la pièce de joaillerie ou d'horlogerie (30).

15. Procédé selon la revendication 14, dans lequel le retrait de matière par fabrication soustractive est réalisé par l'une des techniques suivantes : usinage, de préférence un usinage par commande numérique par ordinateur ; électroérosion par enfonçage ; découpe laser ; découpe par jet d'eau ; découpe par électroérosion à fil ; découpe à la scie à chantourner ; découpe en estampage ; outil de frappe.

16. Procédé selon la revendication 14 ou 15, comprenant en outre, postérieurement au retrait de matière par fabrication soustractive, une étape de terminaison de la pièce de joaillerie ou d'horlogerie (30), par guillochage.

17. Pièce de joaillerie ou d'horlogerie (30), comprenant un bloc composite (20) traité par fabrication soustractive selon le procédé de l'une des revendications 14 à 16, comprenant sur au moins une face transversale un motif (26) formé par retrait de matière du bloc composite (20) depuis ladite face transversale, dans une région de recouvrement (25) qui présente des régions pleines (6) d'au moins deux pièces (1, 2).

18. Pièce de joaillerie ou d'horlogerie (30) selon la revendication 17, dans laquelle le motif (26) a la forme d'un trèfle et comprend une terminaison guillochée.
